# EUROPEAN PATENT APPLICATION

(11) **EP 2 963 330 A1**
(43) Date of publication of application: **06.01.2016**
(21) Application number: 14175038.0
(22) Date of filing: 30.06.2014
(51) Int. Cl.: F16M 11/10, F16M 11/18, F16M 11/20, F16M 13/02

(54) **Monitoring device, and method of adjusting a fixed monitoring device**

(71) Applicant: Axis AB, 223 69 Lund (SE)
(72) Inventor: Sterngren, Fredrik, SE-226 54 LUND (SE)
(74) Representative: Awapatent AB

(57) **Abstract**

A fixed monitoring device (1) is disclosed comprising an image collector arrangement (4) and a first adjustment arrangement (6). The adjustment arrangement (6) comprises a main gear (7) arranged to rotate for adjusting a placement of the image collector arrangement (4), a first motor (8), a second motor (9), a first gearing arrangement (10) operatively connecting said first motor (8) to said main gear (7), a second gearing arrangement (11) operative-ly connecting said second motor (9) to said main gear (7). Each of the first and second gearing arrangements are self-locking. A method of adjusting a fixed monitoring device (1) is also disclosed.

## Description

### Technical field

The present invention relates to a fixed monitoring device comprising an image collector arrangement and an adjustment arrangement for adjusting a placement of the image collector arrangement. The invention also relates to a method of adjusting a fixed monitoring device.

### Background

In fixed monitoring devices, such as fixed monitoring cameras and fixed PIR sensors, it is often necessary to adjust a placement of the image collection arrangement of the monitoring device. For many monitoring devices, this may be done manually during installation, by turning the monitoring device to a desired position, such that a desired field of view may be achieved. However, in some situations such manual adjustment is not satisfactory, because the installer cannot check the achieved field of view during manual adjustment. This may necessitate the involvement of two people, one of them adjusting the placement of the monitoring device, and the other checking the achieved field of view, e.g., watching a monitor to which images from the monitoring device are transmitted. In some instances, the fixed monitoring device may need to be adjusted after installation, and if the monitoring device is mounted in a place that is difficult to reach, manual adjustment may be impractical.

In an aim to solve these problems, fixed monitoring devices have been proposed whose placement may be adjusted remotely. For instance, there are fixed monitoring cameras in which the lens and image sensor assembly may be rotated by means of a main gear, to which a motor is connected via a gearing arrangement. The motor drives the main gear in rotation until a desired rotary position of the lens and image sensor assembly has been reached. In order to ensure that, once the desired rotary position has been reached, that position is maintained, a gearing arrangement providing a high frictional resistance is used. Thus, when the motor is stopped, the frictional forces in the gearing arrangement prevent further rotation of the main gear, thereby ensuring that the lens and image sensor assembly is kept in position. This may in many instances be a satisfactory solution, but the high frictional forces that have to be overcome place high requirements on the motor used. High requirements are also placed on the gears in terms of tolerances and play. Therefore, in some cases, it would be desirable to have an adjustment arrangement that may be manufactured at a lower cost, or that may require less space.

### Summary of the invention

It is an object of the invention to provide a fixed monitoring device having an adjustment arrangement that may be manufactured at a low cost. Another object is to provide a fixed monitoring device having an adjustment arrangement that may require little space. It is also an object to provide a method of adjusting a fixed monitoring device that may be implemented cost effectively, and that may ensure that the image collector arrangement of the monitoring device is maintained securely in position after adjustment, without requiring a large and expensive adjustment arrangement.

According to a first aspect, these and other objects are achieved, in full or at least in part, by a fixed monitoring device comprising an image collector arrangement and a first adjustment arrangement, said adjustment arrangement comprising
a main gear arranged to rotate for adjusting a placement of said image collector arrangement,
a first motor,
a second motor;
a first gearing arrangement operatively connecting said first motor to said main gear,
a second gearing arrangement operatively connecting said second motor to said main gear,
said first and second gearing arrangements each being self-locking. By having two motors, it may be possible to use smaller, less expensive motors, since they can be used cooperatively to rotate the main gear. Additionally, by utilizing gearing arrangements which are self-locking, it may be ensured that the main gear is not rotated further after the motors have been stopped, without having to use gears providing high frictional resistance. This also makes it possible to use a smaller, less expensive motor, since the motor does not have to overcome a high frictional force for rotating the main gear. Using two smaller motors may make it easier to fit the motors in a housing of a monitoring device than if one larger motor is used.

As used herein, the terms "fixed monitoring device" and "fixed camera", refer to monitoring devices and cameras, respectively, which are in themselves incapable of panning, tilting, and rolling.

Further, the term "adjustment" is to be understood as a movement undertaken primarily during installation of a fixed monitoring device, and hence not the movements performed by, e.g., a PTZ camera during operation. Adjustments may be made at the initial installation of a monitoring device, as well as at a point in time after the monitoring device has been installed.

According to an embodiment, at least one of said first and second gearing arrangements comprises a worm. A worm drive may ensure a secure locking of the adjustment arrangement when the motors are stopped. Further, it may be made compact, and may reduce the rotation speed from the motor to the main gear, and provide a high torque to the main gear in an efficient manner.

Adjusting a placement of said image collector arrangement may comprise adjusting a rotary position of said image collector arrangement. In this manner, the fixed monitoring device may be adjusted to cover a desired field of view.

Adjusting a placement of said image collector arrangement may comprise adjusting a distance between a sensor and an optical arrangement of said image collector arrangement. In this manner, the fixed monitoring device may be adjusted to obtain a desired focus.

In one embodiment, said first and second motors are arranged to cooperatively rotate said main gear in a first direction for rotating said image collector arrangement. Hereby, even small motors may be used for rotating the main gear.

In another embodiment, one of said first and second motors is arranged to be stopped while another of said first and second motors is arranged to drive the corresponding gearing arrangement in a second direction, which is opposite to said first direction, for compensating for backlash in said first and second gearing arrangements. In this manner, it may be ensured that the image collector arrangement of the fixed monitoring device is adjusted securely to a desired placement. Alternatively, said other motor may be arranged to continue driving its corresponding gearing arrangement in said first direction for compensating for said backlash.

It should in this context be noted that, references to directions are made in relation to rotation of the main gear. However, it is not the main gear that should be rotated for compensating for backlash. Rather, it is desirable to keep the main gear still once it has reached a desired position, but the motor in question should drive the corresponding gearing arrangement in the way it does for rotating the main gear in the direction in question.

In yet another embodiment, one of said first and second motors is arranged to drive the corresponding gearing arrangement in said first direction while another of said first and second motors is arranged to drive the corresponding gearing arrangement in a second direction, which is opposite to said first direction, for compensating for backlash in said first and second gearing arrangements. This is another way of ensuring that the image collector arrangement of the fixed monitoring device is adjusted securely to a desired placement.

In still another embodiment, one of said first and second motors is arranged to drive the corresponding gearing arrangement in a second direction, which is opposite to said first direction, at a first speed, while another of said first and second motors is arranged to drive its corresponding gearing arrangement in said second direction at a second speed, which is different from said first speed, for compensating for backlash in said first and second gearing arrangements. This is also a way of ensuring that the image collector arrangement of the fixed monitoring device is adjusted securely to a desired placement.

The fixed monitoring device may comprise a control unit arranged to control a locking force provided by said other motor for locking said main gear based on a current of said other motor. Hereby, it may, in a practical way, be ensured that the main gear is securely locked in the desired placement. For instance, if a DC motor is used, the current supplied to the DC motor may be used as a measure of a force currently applied by the DC motor. Once a desired locking force has been applied, the motor may be stopped and still lock the main gear. Too high locking forces, that would risk damaging the gearing arrangement, may be avoided.

According to an embodiment, the fixed monitoring device further comprises a second and a third adjustment arrangement, wherein
the first adjustment arrangement is arranged to adjust the rotary position of the image collector arrangement in a roll direction,
the second adjustment arrangement is arranged to adjust the rotary position of the image collector arrangement in a pan direction, and
the third adjustment arrangement is arranged to adjust the rotary position of the image collector arrangement in a tilt direction. With such adjustment arrangements, it is possible to adjust the fixed monitoring camera in rotation about three axes, thereby making it possible to adjust the image collector arrangement in all rotational directions to achieve a desired field of view.

The fixed monitoring device may be a fixed camera, wherein said image collector arrangement comprises a lens and an image sensor.

According to a second aspect, these and other objects are achieved, in full or at least in part, by a method of adjusting a fixed monitoring device having an image collector arrangement and a first adjustment arrangement, said method comprising
rotating a main gear of said first adjustment arrangement, thereby adjusting a placement of said image collector arrangement,
wherein said main gear is rotated in a first direction by a first motor operatively connected to said main gear via a first gearing arrangement, and a second motor operatively connected to said main gear via a second gearing arrangement,
said first and second motors cooperating to rotate the main gear until the image collector arrangement has reached a predetermined placement, and
when said image collector arrangement has reached said predetermined placement,
driving at least one of said first and second gearing arrangements in a second direction, which is opposite to said first direction until backlash in said first and second gearing arrangements has been compensated for. By this method, it may be possible to adjust a fixed monitoring device, without the need for a strong, expensive motor. Since two motors are used cooperatively, smaller, less expensive motors may be used. Further, fitting two small motors in a housing of a fixed monitoring device may be easier than fitting one larger motor. Driving one or both of the gearing arrangements in the second direction once the image collector arrangement has reached the predetermined placement makes it possible to ensure that the image collector arrangement is maintained in the desired placement, even if there is backlash due to tolerances in the gearing arrangement.

The method may comprise, when said image collector arrangement has reached said predetermined placement,
stopping one of said first and second motors, and
driving another of said first and second motors to drive the corresponding gearing arrangement until said backlash has been compensated for. This is a practical way of ensuring that the image collector arrangement is maintained in the desired placement. Alternatively, said other motor may continue driving its corresponding gearing arrangement in said first direction until said backlash has been compensated for.

When said backlash has been compensated for, said other motor may be stopped. Thereby, there is no need for power to the motors once the main gear has been secured in the predetermined position.

In a variant, the method comprises, when said image collector arrangement has reached said predetermined placement, driving one of said first and second motors to drive the corresponding gearing arrangement in said first direction, and driving another of said first and second motors to drive the corresponding gearing arrangement in said second direction until said backlash has been compensated for. This is another way of ensuring that the image collector arrangement is maintained in the desired placement.

In another variant, the method comprises, when said image collector arrangement has reached said predetermined placement, driving one of said first and second motors to drive the corresponding gearing arrangement in said second direction at a first speed, and driving another of said first and second motors to drive the corresponding gearing arrangement in said second direction at a second speed, which is different from said first speed, until said backlash has been compensated for. This is also a way of ensuring that the image collector arrangement is maintained in the desired placement.

When said backlash has been compensated for, the first and second motors may be stopped. In this manner, power consumption may be reduced.

Adjusting a placement of said image collector arrangement may comprise adjusting a rotary position of said image collector arrangement. In this manner the fixed monitoring device may be adjusted to cover a desired field of view.

Adjusting a placement of said image collector arrangement may comprise adjusting a distance between a sensor and an optical arrangement of said image collector arrangement. In this manner, the fixed monitoring device may be adjusted to obtain a desired focus.

In a variant of the method, a locking force provided by said other motor for locking said main gear is controlled based on a current of said other motor. Hereby, it is possible to ensure that the image collector arrangement is securely locked in the desired placement. It is also possible to avoid a too high locking force that would risk damaging the gearing arrangements.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, a reference to "an object" or "the object" may include several objects, and the like. Furthermore, the word "comprising" does not exclude other elements or steps.

### Brief Description of the Drawings

The invention will now be described in more detail by way of example and with reference to the accompanying schematic drawings, in which:
Fig. 1 is a perspective view of a fixed monitoring camera according to an embodiment;
Fig. 2 is a perspective view of the fixed monitoring camera in Fig. 1 with the cover removed;
Fig. 3 is a top view of an adjustment arrangement of the fixed camera in Fig. 1;
Fig. 4 is a perspective view of an assembly of adjustment arrangements of a fixed camera according to another embodiment;
Fig. 5 is a perspective view of a gearing arrangement for an adjustment arrangement of a fixed camera according to yet another embodiment;
Fig. 6 is a side view, partially in section, of an adjustment arrangement of a fixed camera according to still another embodiment.

### Detailed description of embodiments

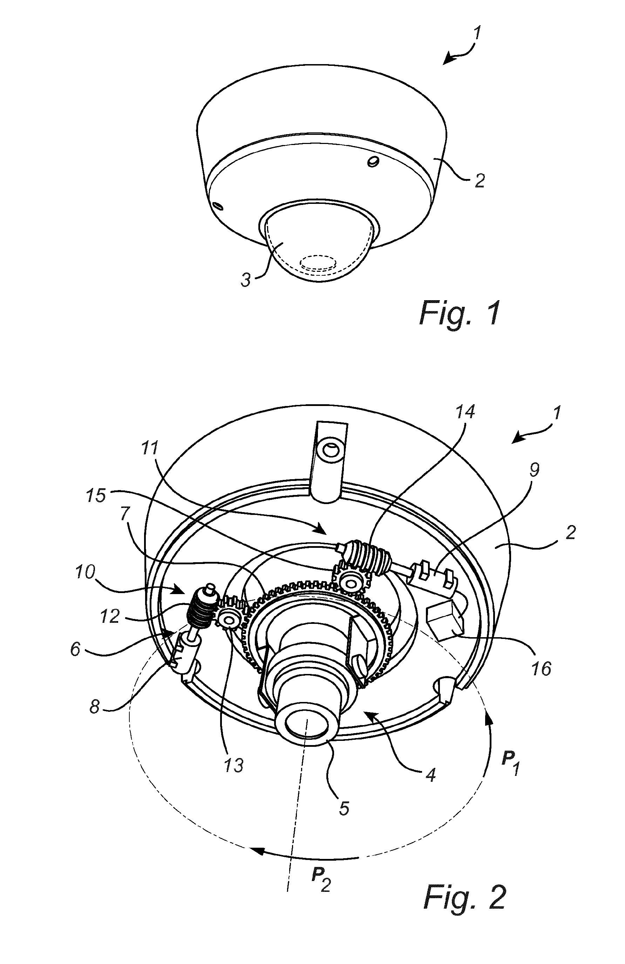

In Fig. 1, a fixed monitoring device in the form of a fixed dome camera 1 is shown. The camera 1 has a housing 2, which may be attached to, e.g., a ceiling or a wall. Further, the camera 1 has a transparent, dome-shaped cover 3, through which a scene may be captured by an image collector arrangement (not visible in Fig. 1) of the camera 1.

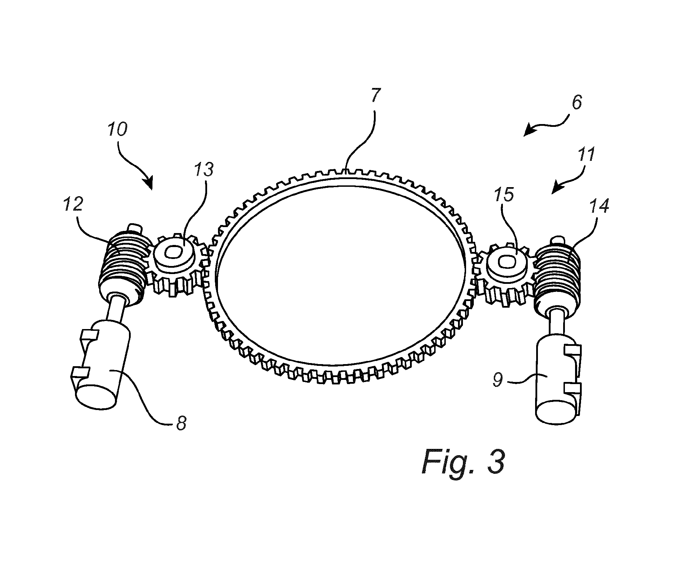

Fig. 2 is a perspective view of the camera 1 with the cover removed. Here, the image collector arrangement 4 of the camera 1 may be seen. The image collector arrangement 4 comprises an image sensor (not visible in Fig. 2), and a lens 5. The camera further comprises an adjustment arrangement 6 for adjusting the image collector arrangement 4. In the embodiment shown in Fig. 2, and in closer detail in Fig. 3, the adjustment arrangement 4 comprises a main gear 7, a first motor 8, and a second motor 9. The adjustment arrangement further comprises a first gearing arrangement 10 operatively connecting the first motor 8 to the main gear 7, and a second gearing arrangement 11 operatively connecting the second motor 9 to the main gear 7. The first gearing arrangement 10 comprises a first worm drive, in which a first worm 12 is operatively connected to a first worm gear 13. The first worm drive is self-locking, such that the first worm 12 may drive the first worm gear 13 in rotation, but not vice versa. Analogously, the second gearing arrangement 11 comprises a second worm drive, in which a second worm 14 is operatively connected to a second worm gear 15. The second worm drive is also self-locking, such that the second worm 14 may drive the second worm gear 15 in rotation, but not vice versa. In the embodiment shown in Fig. 2, the first and second motors 8, 9 are DC motors.

The adjustment arrangement 6 further comprises a control unit 16, which is arranged to monitor a power supply to the second motor 9 and control the second motor 9 based on the power supply. The power supply to a DC motor may be used as a measure of the force applied by the motor. Hence, by monitoring the power supply, or current, to the motor it is possible to determine when a desired locking force has been applied. Further, it is possible to avoid applying a locking force that is too high and would risk jamming and damaging the gearing arrangement.

At some point after the camera 1 has been mounted, e.g., in a ceiling or on a wall, it may be desirable to adjust a placement of the image collector arrangement 4, such that the camera 1 obtains a desired field of view for capturing a scene to be monitored. This may be immediately after mounting, or later, for instance if the environment around the camera 1 has changed, such that the image collector arrangement 4 needs to be adjusted to obtain a new desired field of view for capturing the scene. With a camera 1 in accordance with the embodiment shown in Fig. 2, such adjustment may be done according to a method which will be described in the following. The image collector arrangement 4 is rotated in a first direction P₁ to a predetermined position by rotation of the main gear. In the embodiment shown, depending on the orientation of the image collector arrangement, this is a rolling or panning rotation. More precisely, if the image collector arrangement 4 is oriented straight downwards, as shown in Fig. 2, rotation by the adjustment arrangement 6 will impose a roll adjustment on the image collector arrangement 4. If, on the other hand, the image collector arrangement is slightly tilted, rotation by the adjustment arrangement 6 will impose a pan adjustment on the image collector arrangement 4.The rotation of the main gear is achieved by cooperative rotation by the first and second motors. Once the predetermined position has been reached, the first motor 8 is stopped. Thereafter, the second motor 9 is reversed, such that it rotates the main gear in a second direction P₂, which is opposite to the first direction P₁. Hereby, backlash in the gearing arrangements 10, 11 may be overcome, such that the image collector arrangement 4 may be maintained securely in the predetermined placement. During the rotation in the second direction P₂, the control unit 16 monitors the power supply or current to the second motor 9. The current to the second motor 9 may be used as a measure of a locking force provided by the second motor 9. When a predetermined locking force has been achieved, the second motor 9 is stopped. Since the first and second worm drives 12, 13, 14, 15 are self-locking, the main gear 7, and thereby the image collector arrangement 4, is maintained in the predetermined placement without any power having to be supplied to the first and second motors 8, 9 once the predetermined placement has been reached, the backlash has been overcome, and the predetermined locking force has been achieved.

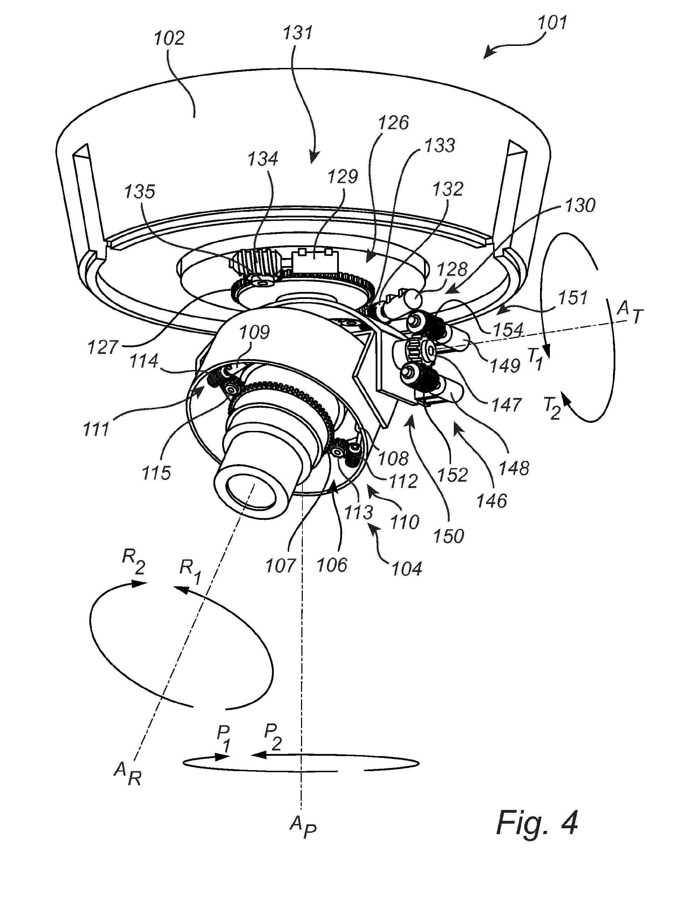

Fig. 4 shows an assembly of adjustment arrangements of a camera 101 according to a second embodiment. This assembly comprises three adjustment arrangements 106, 126, 146. Each of these adjustment arrangements is basically constructed in the same way as the adjustment arrangement 6 shown in Fig. 3. In the same way as in the embodiment described above, the camera 101 has an image collector arrangement 104. The image collector arrangement 104 is adjustable by means of the assembly of adjustment arrangements 106, 126, 146.

A first adjustment arrangement 106 of the assembly has a first main gear 107, a first motor 108, a second motor 109, a first gearing arrangement 110 operatively connecting the first motor 108 to the first main gear 107, and a second gearing arrangement 111 operatively connecting the second motor 109 to the main gear 107. The first gearing arrangement 110 is here made up of a first worm drive, having a first worm 112 and a first worm gear 113. Similarly, the second gearing arrangement 111 is made up of a second worm drive, having a second worm 114 and a second worm gear 115. The first and second worm gears 113, 115 are self-locking, such that they may each be driven by the respective worm 112, 114, but cannot in turn drive the worm 112, 114.

A second adjustment arrangement 126 of the assembly has a second main gear 127, a third motor 128, a fourth motor 129, a third gearing arrangement 130 operatively connecting the third motor 128 to the second main gear 127, and a fourth gearing arrangement 131 operatively connecting the fourth motor 129 to the second main gear 127. The third gearing arrangement 130 is made up of a third worm drive, having a third worm 132, and a third worm gear 133, and the fourth gearing arrangement 131 is made up of a fourth worm drive, having a fourth worm 134, and a fourth worm gear 135. In the same way as for the first adjustment arrangement 106, the third and fourth worm gears 133, 135 are self-locking, such that they may each be driven by the respective worm 132, 134, but cannot drive the worm 132, 134.

Similarly, a third adjustment arrangement 146 of the assembly has a third main gear 147, a fifth motor 148, a sixth motor 149, a fifth gearing arrangement 150 operatively connecting the fifth motor 148 to the third main gear 147, and a sixth gearing arrangement 151 operatively connecting the sixth motor 149 to the third main gear 147. The fifth gearing arrangement 150 is, slightly different from the previously mentioned gearing arrangements, made up of a fifth worm drive, having a fifth worm 152. Similarly, the sixth gearing arrangement 151 is made up of a sixth worm drive, having a sixth worm 154. The fifth and sixth worms 152, 154 are self-locking, just like the first to fourth worm gears.

The first, second and third adjustment arrangements 106, 126, 146 are each rotatable about a first axis A_{P}, a second axis AT, and a third axis A_{R}, respectively. The three adjustment arrangements 106, 126, 146 make it possible to adjust the position of the image collector arrangement 104 in three rotational directions indicated by the arrows P₁, P₂, T₁, T₂, R₁, and R₂. By means of the first adjustment arrangement 106, the rotary position of the image collector arrangement 104 may be adjusted in a roll direction R₁, R₂. By means of the second adjustment arrangement 126, the rotary position of the image collector arrangement 104 may be adjusted in a pan direction P₁, P₂. It may be noted that, if the image collector arrangement is directed straight downwards, similar to the camera shown in Fig. 2, (or straight forwards, if the camera 101 is mounted on a wall), the second adjustment arrangement 126 will have the same effect as the first adjustment arrangement 106, namely to perform a roll adjustment. However, if the image collector arrangement 104 is tilted, as depicted in Fig. 4, the second adjustment arrangement 126 will perform a pan adjustment. By means of the third adjustment arrangement 146, the rotary position of the image collector device 104 may be adjusted in a tilt direction T₁, T₂, which may also be referred to as a pitch direction.

The method used for adjusting the rotary position of the image collector arrangement 104 of the camera according to the embodiment shown in Fig. 4 may be generally the same as the one described above in connection with Fig. 2. The adjustment in the pan, tilt and roll directions may be made all simultaneously, or one at a time. In some instances, only adjustment of the rotary position in one or two of the rotation directions is necessary, whereas in other instances, adjustment in all three rotation directions is necessary.

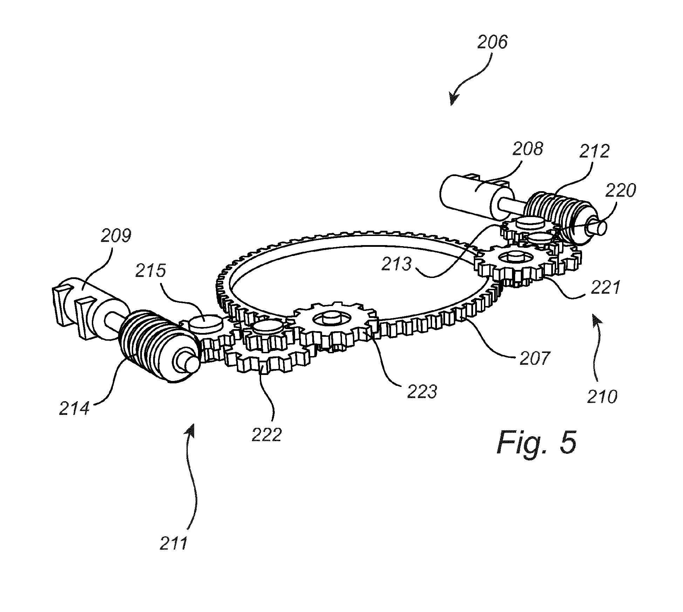

In the embodiments shown in Figs 2 and 4, the gearing arrangements are generally constructed as worm drives having only a worm and a worm gear. However, depending on the gear ratio that is desired, and the space available for the gearing arrangement, more gears may be included in one or more of the gearing arrangements. The worm or the worm gear may be arranged directly engaging the main gear, or with one or more other gears between the worm gear and the main gear. In some instances, where space is restricted, it may be useful to place the gears of one or more of the gearing arrangements in a banana-shaped or crescent-shaped configuration, such as schematically shown in Fig. 5. It may be noted that in Fig. 4, one of the adjustment arrangements, namely the second adjustment arrangement 126, has gearing arrangements 150, 151 without any worm gear between the worm 152, 154 and the main gear 147. This is for exemplifying reasons only. All three adjustment arrangements may be made with gearing arrangements having no, one or more gears between the worm and the main gear. The gearing arrangements of the three adjustment arrangements may all be constructed in the same way, or they may differ from one adjustment arrangement to another.

The adjustment arrangement 206 in Fig. 5 has a main gear 207, a first motor 208, and a second motor 209. A first gearing arrangement 210 operatively connects the first motor 208 to the main gear 207, and a second gearing arrangement 211 operatively connects the second motor 209 to the main gear 207. The first gearing arrangement 210 is made up of a first worm 212, a first worm gear 213, a first intermediate gear 220, and a first inner gear 221. Similarly, the second gearing arrangement 211 is made up of a second worm 214, a second worm gear 215, a second intermediate gear 222, and a second inner gear 223. In the same way as for the embodiments described above, the worm gear 213, 215 of the respective gearing arrangement 210, 211 is self-locking. The gears 213, 215, 220, 221, 222, and 223 may, as shown in this figure, each have two portions of different diameter, wherein each gear is driven on the larger diameter portion, and with its smaller diameter portion drives the next gear in the gearing arrangement.

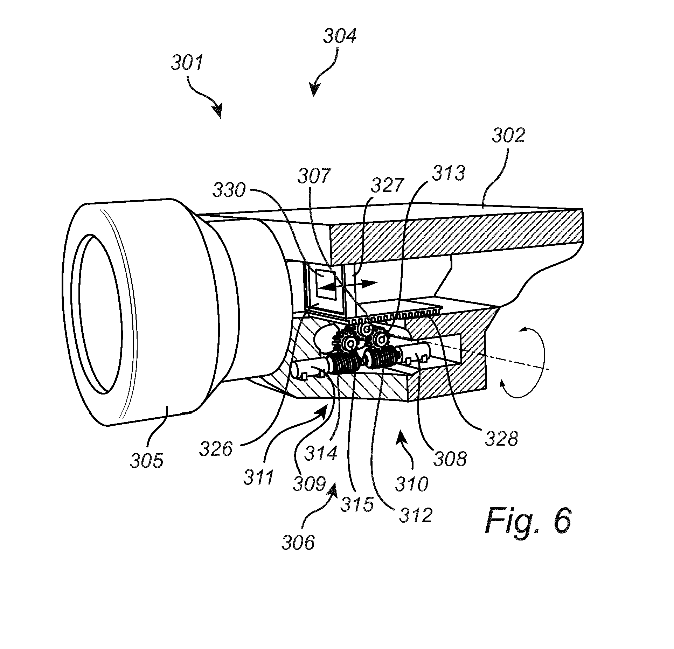

With reference to Fig. 6 another embodiment of a camera with an adjustment arrangement will be described. Similar to the above described embodiments, the camera 301 has a housing 302 and an image collector arrangement 304. The image collector arrangement 304 comprises an optical arrangement in the form of a lens 305 and an image sensor 330. The camera 301 also has an adjustment arrangement 306 for adjusting a placement of the image collector arrangement 304. However, this adjustment arrangement 306 is not arranged to adjust a rotary position of the image collector arrangement 306, but to adjust a position of the sensor 330 in relation to the lens 305. Hence, the adjustment arrangement 306 of this embodiment is arranged to translationally adjust a distance between the image sensor 330 and the lens 305. To this end, the adjustment arrangement 306 has a main gear 307, a first motor 308, a second motor 309, a first gearing arrangement 310, and a second gearing arrangement 311. The first gearing arrangement 310 operatively connects the first motor 308 to the main gear 307, and the second gearing arrangement 311 operatively connects the second motor 309 to the main gear 307. The first gearing arrangement 310 is made up of a first worm 312 operatively connected to a first worm gear 313, and the second gearing arrangement 311 is made up of a second worm 314 connected to a second worm gear 315. As in the embodiments described above, the first and second worm gears 313, 315 are self-locking. Thus, each worm may drive the respective worm gear, but not the other way around. Further, the adjustment arrangement 306 may include a control unit (not shown) connected to the second motor 309 and arranged to monitor a power supply to the second motor 309.

The image sensor 330 is arranged on a printed circuit board or PCB 326, which in turn is arranged in a PCB holder 327. The PCB holder 327 is attached to a rack 328. The main gear 307 is operatively connected to the rack 328. Thus, by rotating the main gear 307, the PCB 326 with the image sensor 330 may be moved closer to or further away from the lens 305 for adjusting back focus of the camera 301.

The method of adjusting the position of the image sensor 330 in relation to the lens 305 may be essentially the same as the method described above in connection with Fig. 2. Thus, in order to move the image sensor 330 in a translational movement in relation to the lens 305, the main gear 307 is rotated in a first direction by means of the first and second motors 308, 309 working in cooperation. Once the image sensor 330 has reached a desired, predetermined position, the first motor 308 is stopped, and the second motor 309 is reversed, such that it drives the second gearing arrangement 311 slightly in a second direction, which is opposite the first direction. This counter-rotation is continued until backlash in the gearing arrangements 310, 311 has been overcome. The locking force provided by the second motor 309 is controlled by the control unit 316 by monitoring the power supply to the second motor 309. When a desired locking force has been provided, the second motor 309 is also stopped. Thereafter, no power has to be added for maintaining the main gear 307 in the predetermined position, and hence maintaining the image sensor 330 in the predetermined position in relation to the lens 305.

It will be appreciated that a person skilled in the art can modify the above described embodiments in many ways and still use the advantages of the invention as shown in the embodiments above. As an example, other self-locking gearing arrangements may be used, such as Geneva drives, or internal Geneva drives. Further, a gearing arrangement with a train of gears providing a large total gear ratio (e.g., 100:1) may also provide the desired self-locking function. As compared to a worm drive, a large gear ratio gear train may make it possible to achieve a higher efficiency. This is because if a worm drive is formed with a sufficiently small angle to provide a self-locking effect, the efficiency is reduced. Still, worm drives may generally require little space, and may be made at a low cost. It is also possible to employ a combination of a worm drive and a large gear ratio gear train, with part of the self-locking function performed by the worm drive, and part of it performed by the large gear ratio gear train.

Regardless of what part of the gearing arrangement provides the self-locking function, this part may be placed anywhere between the motor and the main gear. For instance, in a gearing arrangement with a worm and two gears between the motor and the main gear, the worm may be arranged directly engaging the motor, directly engaging the main gear, or somewhere between the other gears. It may here be noted that it may be practical to place the self-locking part of the gearing arrangement as close to the main gear as possible, since this reduces the number of gears that have to be in tension during locking. Thereby, the strain on the gears is reduced, allowing less expensive gears to be used, for instance gears made of plastic.

In the embodiments described above, the motors used are DC motors. An advantage of this kind of motor is that the force applied by them may easily be controlled by monitoring the current supplied to them. However, other motors may be used, for instance stepping motors. If a stepping motor is used, the locking force applied may be controlled by monitoring the number of steps performed by the stepping motor. In order to avoid applying a locking force that is too high and would risk jamming or damaging the gearing arrangement, the voltage supplied to the motor may be lowered during backlash compensation.

In the embodiments shown in Fig. 2, and Fig. 4, respectively, the gearing arrangements each have one worm and one worm gear, and in the embodiment shown in Fig. 5 the gearing arrangements each have a further two gears. However, any number of gears may be chosen depending on the gearing ratio to be achieved, and the space available for the gearing arrangements. Further, the gearing arrangements may as well be formed with only a worm in direct operative connection with the main gear, i.e., without any gear between the worm and the main gear. It should also be borne in mind that the total backlash of a gear train is the sum of the backlash of each pair of gears in the gear train. Thus, in long gear trains, the backlash may be considerable.

Even though it is only in the embodiment shown in Fig. 5 that the gears each have two portions of different diameters, such gears may be used to advantage in all embodiments.

It should be noted that the numbering of the motors above as a first and a second motor is purely for simplification of the description. It does not matter which of the motors is stopped, and which is operated to rotate in the other direction. Still, if a control unit is used for controlling the locking force applied on the main gear after the main gear has been rotated to the desired position, that control unit should control the motor that is used for counter-rotation for overcoming backlash. If both motors are used for compensating for backlash, one or both motors may be monitored by one control unit monitoring the current to the one motor, one control unit monitoring both motors, or one control unit per motor.

Similarly, in the embodiment shown in Fig. 4, the particular order in which the three adjustment arrangements for pan, tilt and roll adjustment are described is of no importance for the function of the adjustment arrangement assembly. Further, the axes around which the main gears of the respective adjustment arrangements rotate need not be perpendicular, but could be arranged at other angles, depending on the desired adjustment directions. Still further, any number of adjustment arrangements may be combined. For instance, only two adjustment arrangements could be arranged, e.g., if only tilt and roll adjustment is desired.

As described above, the backlash may be overcome by stopping one of the motors when the main gear has been rotated in one direction to the desired position, and then operating the other motor to rotate the main gear in the opposite direction until the backlash has been overcome. However, a similar result may be achieved by instead operating the motors to rotate the main gear in different directions, or by operating the motors to rotate the main gear in the same direction, but at different speeds. In the former case, once the main gear has been rotated in one direction to a desired position, one of the motors is operated to continue rotating the main gear in that direction, whereas the other motor is operated to rotate the main gear in the opposite direction until the backlash has been overcome. In the latter case, once the main gear has been rotated in one direction to a desired position, both motors are operated to rotate the main gear in the opposite direction, but at different speeds, until the backlash has been overcome.

Instead of arranging the control unit to monitor the power supply to the second motor, the control unit may be arranged to monitor the power supply to the first motor. Further, the control unit may be arranged to monitor the power supply to both motors. Alternatively, two control units may be employed, each monitoring a respective one of the motors.

In the embodiment described in connection with Fig. 6, for adjusting back focus of the camera 301, the PCB 326 carrying the image sensor 330 is moved closer to or further from the lens 305. In other embodiments it may be useful to instead move the lens and keep the image sensor stationary. This would be another way of adjusting the distance between the image sensor and the lens, and hence adjusting the placement of the image collector arrangement.

In Fig. 6, the adjustment arrangement 306 has a rack, which is moved backwards or forwards by rotation of the main gear 307. However, in another embodiment, a threaded rod may be used instead of the rack. The main gear may in such case be integrated with or connected to a threaded nut, the nut being arranged in threaded engagement with the threaded rod. In this embodiment, the PCB holder is operatively connected to the nut. By rotation of the main gear, the nut is moved along the threaded rod, thereby moving the PCB holder in translation towards or away from the lens.

The motors of the adjustment arrangement may be powered using a power cord also powering the general camera functions, or using a separate power cord. Alternatively, the motors may be powered via an Ethernet cable, using Power over Ethernet, PoE.

The cameras for which the adjustment arrangements and methods described above are useful may be any type of cameras, such as fixed cameras or fixed dome cameras. Further, the cameras may have any type of sensor, e.g., sensors capturing visible light or infra-red light, or micro bolometers.

It should also be noted that the invention is not limited to cameras or monitoring cameras. It is useful also for other types of monitoring devices, such as PIR sensors and microphones.

Thus, the invention should not be limited to the shown embodiments but should only be defined by the appended claims.

## Claims

1. A fixed monitoring device comprising an image collector arrangement (4; 104; 304) and a first adjustment arrangement (6; 106; 306), said adjustment arrangement (6; 106; 306) comprising
a main gear (7; 107; 207; 307) arranged to rotate for adjusting a placement of said image collector arrangement (4; 104; 304),
a first motor (8; 108; 208; 308),
a second motor (9; 109; 209; 309);
a first gearing arrangement (10; 110; 210; 310) operatively connecting said first motor (8; 108; 208; 308) to said main gear (7; 107; 207; 307),
a second gearing arrangement (11; 111; 211; 311) operatively connecting said second motor (9; 109; 209; 309) to said main gear,
said first and second gearing arrangements (10, 11; 110, 111; 210, 211; 310, 311) each being self-locking.

2. The fixed monitoring device as claimed in claim 1, wherein at least one of said first and second gearing arrangements (10, 11; 110, 111; 210, 211; 310, 311) comprises a worm (12, 14; 112, 114; 212, 214; 312, 314).

3. The fixed monitoring device as claimed in claim 1 or 2, wherein adjusting a placement of said image collector arrangement (4; 104) comprises adjusting a rotary position of said image collector arrangement (4; 104).

4. The fixed monitoring device as claimed in any one of the preceding claims, wherein adjusting a placement of said image collector arrangement (304) comprises adjusting a distance between a sensor (330) and an optical arrangement (305) of said image collector arrangement (304).

5. The fixed monitoring device as claimed in any one of the preceding claims, wherein said first and second motors (8, 9; 108, 109; 208, 209; 308, 309) are arranged to cooperatively rotate said main gear (7; 107; 207; 307) in a first direction for rotating said image collector arrangement (4; 104; 304).

6. The fixed monitoring device as claimed in claim 5, wherein one of said first and second motors (8, 9; 108, 109; 208, 209; 308, 309) is arranged to be stopped while another of said first and second motors (8, 9; 108, 109; 208, 209; 308, 309) is arranged to drive the corresponding gearing arrangement (10, 11; 110, 111; 210, 211; 310, 311) in a second direction, which is opposite to said first direction, for compensating for backlash in said first and second gearing arrangements (10, 11; 110, 111; 210, 211; 310, 311).

7. The fixed monitoring device as claimed in any one of claims 6-8, further comprising a control unit (16) arranged to control a locking force provided by said other motor (8, 9; 108, 109; 208, 209; 308, 309) for locking said main gear (7; 107; 207; 307) based on a current of said other motor (8, 9; 108, 109; 208, 209; 308, 309).

8. The fixed monitoring device as claimed in any one of the preceding claims, further comprising a second and a third adjustment arrangement (126, 146), wherein
the first adjustment arrangement (106) is arranged to adjust the rotary position of the image collector arrangement (104) in a roll direction (R₁, R₂),
the second adjustment arrangement (126) is arranged to adjust the rotary position of the image collector (104) arrangement in a pan direction (P₁, P₂), and
the third adjustment arrangement (146) is arranged to adjust the rotary position of the image collector arrangement (107) in a tilt direction (T₁, T₂).

9. The fixed monitoring device as claimed in any one of the preceding claims, said fixed monitoring device being a fixed camera (1; 101; 301), wherein said image collector arrangement (4; 104; 304) comprises a lens (5; 105; 305) and an image sensor (330).

10. A method of adjusting a fixed monitoring device (1; 101; 301) having an image collector arrangement (4; 104; 304) and a first adjustment arrangement (6; 106; 206; 306), said method comprising
rotating a main gear (7; 107; 207; 307) of said first adjustment arrangement (6; 106; 206; 306), thereby adjusting a placement of said image collector arrangement (4; 104; 304),
wherein said main gear (7; 107; 207; 307) is rotated in a first direction by a first motor (8; 108; 208; 308) operatively connected to said main gear (7; 107; 207; 307) via a first gearing arrangement (10; 110; 210; 310), and a second motor (9; 109; 209; 309) operatively connected to said main gear (7; 107; 207; 307) via a second gearing arrangement (11; 111; 211; 311),
said first and second motors (8, 9; 108, 109; 208, 209; 308, 309) cooperating to rotate the main gear (7; 107; 207; 307) until the image collector arrangement (4; 104; 204; 304) has reached a predetermined placement, and
when said image collector arrangement (4; 104; 204; 304) has reached said predetermined placement,
driving at least one of said first and second gearing arrangements (10, 11; 110, 111; 210, 211; 310, 311) in a second direction, which is opposite to said first direction until backlash in said first and second gearing arrangements (10, 11; 110, 111; 210, 211; 310, 311) has been compensated for.

11. The method as claimed in claim 10, comprising, when said image collector arrangement (4; 104; 304) has reached said predetermined placement,
stopping one of said first and second motors (8, 9; 108, 109; 208, 209; 308, 309), and
driving another of said first and second motors (8, 9; 108, 109; 208, 209; 308, 309) to drive the corresponding gearing arrangement (10, 11; 110, 111; 210, 211; 310, 311) in said second direction until said backlash has been compensated for.

12. The method as claimed in claim 10 or 11, wherein when said backlash has been compensated for, said other motor (8, 9; 108, 109; 208, 209; 308, 309) is stopped.

13. The method as claimed in any one of claims 10-12, wherein adjusting a placement of said image collector arrangement (4; 104) comprises adjusting a rotary position of said image collector arrangement (4; 104).

14. The method as claimed in any one of claims 10-12, wherein adjusting a placement of said image collector arrangement (304) comprises adjusting a distance between a sensor (330) and an optical arrangement (5) of said image collector arrangement (304).

15. The method as claimed in any one of claims 10-14, wherein a locking force provided by said other motor (8, 9; 108, 109; 208, 209; 308, 309) for locking said main gear (7; 107; 207; 307) is controlled based on a current of said other motor (8, 9; 108, 109; 208, 209; 308, 309).

## Amended claims

### Amended claims in accordance with Rule 137(2) EPC.

1. A fixed monitoring device comprising an image collector arrangement (4; 104; 304) and a first adjustment arrangement (6; 106; 306), said adjustment arrangement (6; 106; 306) comprising
a main gear (7; 107; 207; 307) arranged to rotate for adjusting a placement of said image collector arrangement (4; 104; 304),
a first motor (8; 108; 208; 308),
a second motor (9; 109; 209; 309);
a first gearing arrangement (10; 110; 210; 310) operatively connecting said first motor (8; 108; 208; 308) to said main gear (7; 107; 207; 307),
a second gearing arrangement (11; 111; 211; 311) operatively connecting said second motor (9; 109; 209; 309) to said main gear,
said first and second gearing arrangements (10, 11; 110, 111; 210, 211; 310, 311) each being self-locking.

2. The fixed monitoring device as claimed in claim 1, wherein at least one of said first and second gearing arrangements (10, 11; 110, 111; 210, 211; 310, 311) comprises a worm (12, 14; 112, 114; 212, 214; 312, 314).

3. The fixed monitoring device as claimed in claim 1 or 2, wherein adjusting a placement of said image collector arrangement (4; 104) comprises adjusting a rotary position of said image collector arrangement (4; 104).

4. The fixed monitoring device as claimed in any one of the preceding claims, wherein adjusting a placement of said image collector arrangement (304) comprises adjusting a distance between a sensor (330) and an optical arrangement (305) of said image collector arrangement (304).

5. The fixed monitoring device as claimed in any one of the preceding claims, wherein said first and second motors (8, 9; 108, 109; 208, 209; 308, 309) are arranged to cooperatively rotate said main gear (7; 107; 207; 307) in a first direction for rotating said image collector arrangement (4; 104; 304).

6. The fixed monitoring device as claimed in claim 5, wherein, for the purpose of compensating for backlash in said first and second gearing arrangements (10, 11; 110, 111; 210, 211; 310, 311):
one of said first and second motors (8, 9; 108, 109; 208, 209; 308, 309) is arranged to be stopped while another of said first and second motors (8, 9; 108, 109; 208, 209; 308, 309) is arranged to drive the corresponding gearing arrangement (10, 11; 110, 111; 210, 211; 310, 311) in a second direction, which is opposite to said first direction, or
one of said first and second motors (8, 9; 108, 109; 208, 209; 308, 309) is arranged to be stopped while another of said first and second motors (8, 9; 108, 109; 208, 209; 308, 309) is arranged to drive the corresponding gearing arrangement (10, 11; 110, 111; 210, 211; 310, 311) in the first direction, or the first and the second motor are arranged to drive the respective gearing arrangements in opposite directions, or
the first and the second motor are arranged to drive the respective gearing arrangements in the same direction but at different speeds.

7. The fixed monitoring device as claimed in claim 6, further comprising a control unit (16) arranged to control a locking force provided by said other motor (8, 9; 108, 109; 208, 209; 308, 309) for locking said main gear (7; 107; 207; 307) based on a current of said other motor (8, 9; 108, 109; 208, 209; 308, 309).

8. The fixed monitoring device as claimed in any one of the preceding claims, further comprising a second and a third adjustment arrangement (126, 146), wherein
the first adjustment arrangement (106) is arranged to adjust the rotary position of the image collector arrangement (104) in a roll direction (R₁, R₂),
the second adjustment arrangement (126) is arranged to adjust the rotary position of the image collector (104) arrangement in a pan direction (P₁, P₂), and
the third adjustment arrangement (146) is arranged to adjust the rotary position of the image collector arrangement (107) in a tilt direction (T₁, T₂).

9. The fixed monitoring device as claimed in any one of the preceding claims, said fixed monitoring device being a fixed camera (1; 101; 301), wherein said image collector arrangement (4; 104; 304) comprises a lens (5; 105; 305) and an image sensor (330).

10. A method of adjusting a fixed monitoring device (1; 101; 301) having an image collector arrangement (4; 104; 304) and a first adjustment arrangement (6; 106; 206; 306), said method comprising
rotating a main gear (7; 107; 207; 307) of said first adjustment arrangement (6; 106; 206; 306), thereby adjusting a placement of said image collector arrangement (4; 104; 304),
wherein said main gear (7; 107; 207; 307) is rotated in a first direction by a first motor (8; 108; 208; 308) operatively connected to said main gear (7; 107; 207; 307) via a first gearing arrangement (10; 110; 210; 310), and a second motor (9; 109; 209; 309) operatively connected to said main gear (7; 107; 207; 307) via a second gearing arrangement (11; 111; 211; 311),
said first and second motors (8, 9; 108, 109; 208, 209; 308, 309) cooperating to rotate the main gear (7; 107; 207; 307) until the image collector arrangement (4; 104; 204; 304) has reached a predetermined placement, and
when said image collector arrangement (4; 104; 204; 304) has reached said predetermined placement,
driving at least one of said first and second gearing arrangements (10, 11; 110, 111; 210, 211; 310, 311) in a second direction, which is opposite to said first direction until backlash in said first and second gearing arrangements (10, 11; 110, 111; 210, 211; 310, 311) has been compensated for, or
driving at least one of said first and second motors (8, 9; 108, 109; 208, 209; 308, 309) in the first direction until backlash in said first and second gearing arrangements (10, 11; 110, 111; 210, 211; 310, 311) has been compensated for, or
driving said first and second motors (8, 9; 108, 109; 208, 209; 308, 309) in opposite directions until backlash in said first and second gearing arrangements (10, 11; 110, 111; 210, 211; 310, 311) has been compensated for.

11. The method as claimed in claim 10, comprising, when said image collector arrangement (4; 104; 304) has reached said predetermined placement,
stopping one of said first and second motors (8, 9; 108, 109; 208, 209; 308, 309), and
driving another of said first and second motors (8, 9; 108, 109; 208, 209; 308, 309) to drive the corresponding gearing arrangement (10, 11; 110, 111; 210, 211; 310, 311) in said second direction until said backlash has been compensated for.

12. The method as claimed in claim 10 or 11, wherein when said backlash has been compensated for, said other motor (8, 9; 108, 109; 208, 209; 308, 309) is stopped.

13. The method as claimed in any one of claims 10-12, wherein adjusting a placement of said image collector arrangement (4; 104) comprises adjusting a rotary position of said image collector arrangement (4; 104).

14. The method as claimed in any one of claims 10-12, wherein adjusting a placement of said image collector arrangement (304) comprises adjusting a distance between a sensor (330) and an optical arrangement (5) of said image collector arrangement (304).

15. The method as claimed in any one of claims 10-14, wherein a locking force provided by said other motor (8, 9; 108, 109; 208, 209; 308, 309) for locking said main gear (7; 107; 207; 307) is controlled based on a current of said other motor (8, 9; 108, 109; 208, 209; 308, 309).
